# EUROPEAN PATENT APPLICATION

(11) **EP 2 448 128 A1**
(43) Date of publication of application: **02.05.2012**
(21) Application number: 09846414.2
(22) Date of filing: 16.12.2009
(51) Int. Cl.: H04B 1/00

(54) **IMPLEMENTING METHOD FOR MATCHING FREQUENCY BANDS OF MOBILE TERMINALS, MOBILE TERMINAL, AND MAINBOARD THEREOF**

(30) Priority: 24.06.2009 CN 200910108393
(71) Applicant: ZTE Corporation, Shenzhen, Guangdong 518057 (CN)
(72) Inventor: SHAO, Yongping, Guangdong 518057 (CN); WU, Yan, Guangdong 518057 (CN); LIANG, Panfeng, Guangdong 518057 (CN); GUO, Shuai, Guangdong 518057 (CN); WEI, Hongpo, Guangdong 518057 (CN); LUO, Yibao, Guangdong 518057 (CN)
(74) Representative: Bongiovanni, Simone
(86) International application number: PCT/CN2009/075636
(87) International publication number: WO 2010/148615

(57) **Abstract**

An implementing method for matching the frequency bands of the mobile terminals, a mobile terminal, and a mainboard thereof are disclosed. The method comprises the following steps: multi frequency bands bonding pad compatibility is achieved respectively on the circuit board by the radio-frequency transmitting module, the radio-frequency receiving module and the radio-frequency front-end module; when the mobile terminal has to work within a certain frequency band, one end of the first connection selection module is connected with the transmitting pin of the frequency band in the signal transmitting/receiving module, and the other end is connected with the radio-frequency transmitting module; one end of the second connection selection module is connected with the receiving pin of the frequency band in the signal transmitting/receiving module, and the other end is connected with the radio-frequency receiving module; the radio-frequency front-end module is connected with the radio-frequency transmitting module and the radio-frequency receiving module.

## Description

### Technical Field

The present invention relates to the field of communication technology and, particularly, to an implementing method for matching the frequency bands of the mobile terminals, and a mobile terminal and a mainboard thereof.

### Background Art

The development of the modern communication technology is extremely rapid. Not only there are a variety of systems, such as Global System for Mobile Communication (GSM for short), Code Division Multiple Access (CDMA for short), Wideband Code Division Multiple Access (WCDMA for short), etc., but also there are a variety of frequency bands which a same system needs to support, for example, CDMA needs to support 800M, 1.9G, 450M, etc. In order to support multi frequency bands, radio-frequency transmitting/receiving circuit(s) corresponding to each of the frequency bands has to be added into the mobile terminal of a certain system when the circuit thereof is designed. However, for a specific market and a specific operator, normally only a specific frequency band is used. Taking CDMA as an example, CDMA 800M is used in China, while CDMA 1.9G is used in Indonesia.

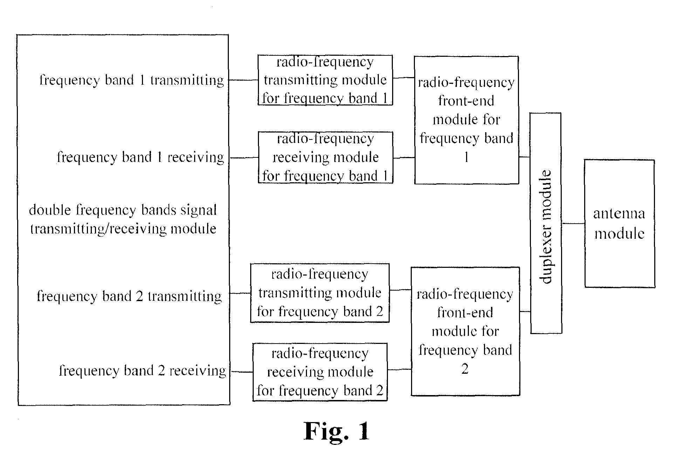

Fig. 1 is a schematic diagram of a module in which a mobile terminal with double frequency bands is supported by two radio-frequency transmitting/receiving circuits according to the related art. As shown in Fig. 1, it illustrates the existing method in which two radio-frequency transmitting/receiving circuits are used to support a mobile terminal with double frequency bands. The function of a band 1 is achieved by means of one radio-frequency transmitting/receiving circuit supporting the band 1, and the function of a band 2 is achieved by means of the other radio-frequency transmitting/receiving circuit supporting the band 2. Such method of employing a plurality of radio-frequency transmitting/receiving circuits to make multi frequency bands compatible cannot be realized in many mobile terminals since it occupies a relatively larger area of the circuit board. At present, this is addressed by a method of designing a plurality of circuit boards. Taking CDMA as an example, in a common method, as for the CDMA 800M market, one circuit board is design on which only the radio-frequency transmitting/receiving devices related to CDMA 800M are bonded and the radio-frequency transmitting/receiving devices related to CDMA 1.9G are not bonded; while as for the CDMA 1.9G market, one circuit board is designed on which only the radio-frequency transmitting/receiving devices related to CDMA 1.9G are bonded and the radio-frequency transmitting/receiving devices related to CDMA 800M are not bonded. The circuit devices of the corresponding frequency band are bonded according to the specific market demand. Such solution causes that the number of the circuit boards to be designed in the mobile terminal is increased, and thus the cost is improved, the design period is prolonged, and more developers are needed.

### Summary of the Invention

The technical problem to be addressed by the present invention is to provide an implementing method for matching the frequency bands of the mobile terminals, a mobile terminal, and a mainboard thereof, so as to overcome the defects that the number of the designed circuit boards in the mobile terminal is increased, the cost is improved, the design period is prolonged, and more developers are needed.

In order to solve the abovementioned technical problem, the present invention provides an implementing method for matching frequency bands of a mobile terminal, the mobile terminal comprises a signal transmitting/receiving module with at least two frequency bands, a radio-frequency transmitting module, a radio-frequency receiving module and a radio-frequency front-end module, said mobile terminal further comprises a first connection selection module and a second connection selection module, and the implementing method for matching the frequency bands of the mobile terminal comprises:
achieving the multi frequency bands bonding pad compatibility on a circuit board respectively by said radio-frequency transmitting module, said radio-frequency receiving module and said radio-frequency front-end module;
when said mobile terminal needs to work within a certain frequency band, connecting one end of said first connection selection module to the transmitting pin of the frequency band in said signal transmitting/receiving module, and connecting the other end thereof to said radio-frequency transmitting module; connecting one end of said second connection selection module to a receiving pin of the frequency band in said signal transmitting/receiving module, and connecting the other end thereof to said radio-frequency receiving module; and connecting said radio-frequency front-end module to said radio-frequency transmitting module and said radio-frequency receiving module.

Further, in the abovementioned method, said first selection module or said second selection module comprises at least two of resistors, capacitor(s) or inductor(s).

Further, in the abovementioned method, achieving the multi frequency bands bonding pad compatibility on a circuit board respectively by said radio-frequency transmitting module, said radio-frequency receiving module and said radio-frequency front-end module specifically refers to that said radio-frequency transmitting module, said radio-frequency receiving module and said radio-frequency front-end module can be compatible on the circuit board with the various frequency bands in said signal transmitting/receiving module.

Further, in the abovementioned method, said radio-frequency transmitting module comprises a radio-frequency power amplifier, a coupler and a matching network.

Further, in the abovementioned method, said radio-frequency receiving module comprises a matching network.

Further, in the abovementioned method, said radio-frequency front-end module comprises a duplexer and a matching network.

In order to solve the abovementioned technical problem, the present invention also provides a mobile terminal, and the mobile terminal comprises a signal transmitting/receiving module with at least two frequency bands, a radio-frequency transmitting module, a radio-frequency receiving module, a radio-frequency front-end module and an antenna module, in which said radio-frequency transmitting module, said radio-frequency receiving module and said radio-frequency front-end module achieve the multi frequency bands bonding pad compatibility respectively on a circuit board; and
said mobile terminal further comprises a first connection selection module and a second connection selection module, in which one end of said first connection selection module is connected to a transmitting pin of a certain frequency band in said signal transmitting/receiving module, and the other end thereof is connected to said radio-frequency transmitting module; one end of said second connection selection module is connected to a receiving pin of the frequency band in said signal transmitting/receiving module, and the other end thereof is connected to said radio-frequency receiving module; and said radio-frequency front-end module is connected to said radio-frequency transmitting module and said radio-frequency receiving module.

Further, said first selection module or said second selection module comprises at least two of resistors, capacitor(s) or inductor(s).

Further, said radio-frequency transmitting module, said radio-frequency receiving module and said radio-frequency front-end module achieving the multi frequency bands bonding pad compatibility respectively on a circuit board specifically refers to that said radio-frequency transmitting module, said radio-frequency receiving module and said radio-frequency front-end module can be compatible on the circuit board with the various frequency bands in said signal transmitting/receiving module.

Further, said radio-frequency transmitting module comprises a radio-frequency power amplifier, a coupler and a matching network.

Further, said radio-frequency receiving module comprises a matching network.

Further, said radio-frequency front-end module comprises a duplexer and a matching network.

In order to solve the abovementioned technical problem, the present invention also provides a mainboard for a mobile terminal, the mainboard comprises a signal transmitting/receiving module interface, a radio-frequency transmitting module interface, a radio-frequency receiving module interface and a radio-frequency front-end module interface, and said mainboard further comprises a first connection selection module interface and a second connection selection module interface, in which one end of said first connection selection module interface is used for selectively connecting a pin in said signal transmitting/receiving module interface, and the other end thereof for connecting said radio-frequency transmitting module interface; one end of said second connection selection module is used for selectively connecting a pin in said signal transmitting/receiving module interface, and the other end thereof for connecting said radio-frequency receiving module interface; and said radio-frequency front-end module interface connects said radio-frequency transmitting module interface and said radio-frequency receiving module interface.

In this case, in the abovementioned method or mobile terminal, said mobile terminal may be a cell phone or a network card, etc.

Since the technical solution disclosed by the present invention achieves the compatibility of multi frequency bands by using a single radio-frequency transmitting/receiving circuit, it can realize that one circuit board implements multi frequency bands in the miniaturization design of mobile terminals, which replaces the current multi circuit boards, so as to reduce the research and development costs and decrease the period of research and development and research personnel.

### Brief Description of the Drawings

Fig. 1 is a module schematic diagram in which a mobile terminal with double frequency bands is supported by two radio-frequency transmitting/receiving circuits according to the related art;
Fig. 2 is a module schematic diagram of a mobile terminal with double frequency bands in an embodiment of the present invention;
Fig. 3 is a module schematic diagram of a mobile terminal of CDMA 800M and CDMA 1900M in an embodiment of the present invention;
Fig. 4 is a module schematic diagram in which a single radio-frequency transmitting/receiving circuit of a mobile terminal with multi frequency bands is compatible with *N* frequency bands in an embodiment of the present invention;
Fig. 5 is a module schematic diagram in which a single radio-frequency transmitting/receiving circuit of a mobile terminal with multi frequency bands is compatible with *N-M* frequency bands in an embodiment of the present invention; and
Fig. 6 is a module schematic diagram of a mobile terminal in an embodiment of the present invention.

### Detailed Description of the Embodiments

In order to further describe the technical means adopted by the present invention to achieve the predetermined target and the effects thereof, the implementing method for matching the frequency bands of mobile terminals, the mobile terminal, and the mainboard thereof will be described in detail hereinbelow in conjunction with the accompanying drawings and the embodiments.

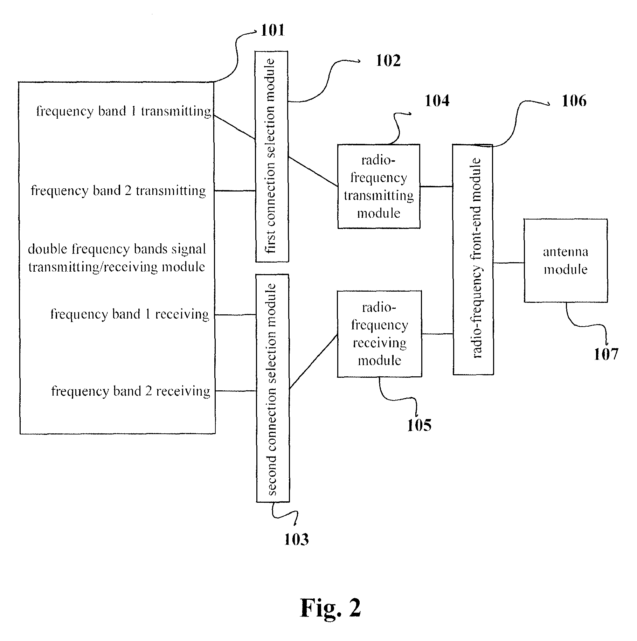

Fig. 2 is a module schematic diagram of a mobile terminal with double frequency bands in an embodiment of the present invention, and as shown in Fig. 2, a double frequency bands signal transmitting/receiving module 101 fulfills the transmission and reception of the radio-frequency signals of the frequency band 1 and the frequency band 2, and a first connection selection module 102 and a second connection selection module 103 select the frequency band 1 or the frequency band 2 to be connected to a single radio-frequency transmitting/receiving circuit according to the requirement, and at the same time disconnect the signal with unnecessary frequency band from the single radio-frequency transmitting/receiving circuit. A radio-frequency transmitting module 104, a radio-frequency receiving module 105 and a radio-frequency front-end module 106 are compatible with the frequency band 1 and the frequency band 2 on the circuit board, therefore the modules with the corresponding frequency band can be bonded according to the practical requirement, and an antenna module 107 is selected to support the modules with the corresponding frequency band, so as to achieve that the single radio-frequency transmitting/receiving circuit supports the double frequency bands. In this embodiment, the single radio-frequency transmitting/receiving circuit specifically refers to the circuit composed of the radio-frequency transmitting module 104, the radio-frequency receiving module 105, the radio-frequency front-end module 106 and the antenna module 107.

Specifically speaking, if the mobile terminal supporting the frequency band 1 is needed, the first connection selection module 102 connects the transmitting signal of the frequency band 1 in the double frequency bands signal transmitting/receiving module 101 to the single radio-frequency transmitting/receiving circuit, and disconnects the transmitting signal of the frequency band 2 in the double frequency bands signal transmitting/receiving module 101 from the single radio-frequency transmitting/receiving circuit; and the second connection selection module 103 connects the receiving signal of the frequency band 1 in the double frequency bands signal transmitting/receiving module 101 to the single radio-frequency transmitting/receiving circuit, and disconnects the receiving signal of the frequency band 2 in the double frequency bands signal transmitting/receiving module 101 from the single radio-frequency transmitting/receiving circuit. The radio-frequency transmitting module 104, the radio-frequency receiving module 105 and the radio-frequency front-end module 106 are all bonded with the modules corresponding to the frequency band 1, and are connected to the antenna module 107 supporting the frequency band 1, so as to fulfill the radio-frequency support for the frequency band 1.

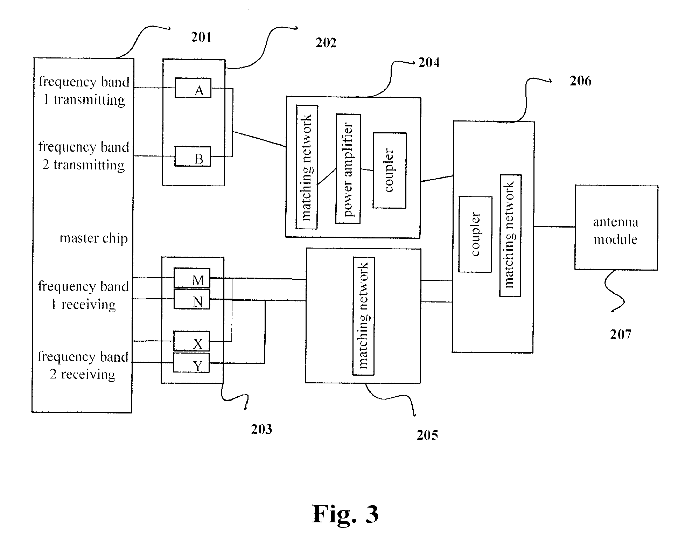

Fig. 3 is a module schematic diagram of a mobile terminal of CDMA 800M and CDMA 1900M in an embodiment of the present invention, and as shown in Fig. 3, the master chip 201 can fulfill the transmission and reception of the radio-frequency signals of CDMA 800M and CDMA 1900M.

The first connection selection module 202 is composed of two capacitors, wherein one end of a capacitor A is connected to the transmitting pin of CDMA 800M of the master chip 201, one end of a capacitor B is connected to the transmitting pin of CDMA 1900M of the master chip 201, and the other ends of the capacitors A and B are connected with each other to join a radio-frequency transmitting path.

The second connection selection module 203 is composed of four capacitors, and in this embodiment, since the receiving signals of CDMA 800M and CDMA 1900M are both differential signals, there are two signal lines for each receiving signal, wherein capacitors M and N respectively have one end which is respectively connected to one of the two differential receiving pins of CDMA 800M of the master chip 201, capacitors X and Y respectively have one end which is respectively connected to one of the two differential receiving pins of CDMA 1900M of the master chip 201, the other ends of the capacitors M and X are connected with each other to join the radio-frequency receiving path, and the other ends of the capacitors N and Y are connected with each other to join the radio-frequency receiving path.

The radio-frequency transmitting module 204 comprises a radio-frequency power amplifier, a coupler and a matching network, etc., and appropriate devices are selected to make the bonding pad compatibility of the radio-frequency power amplifiers, the couplers and the matching networks of CDMA 800M and CDMA 1900M on the circuit board.

The radio-frequency receiving module 205 comprises a matching network, etc., and appropriate devices are selected to make the bonding pad compatibility of the matching networks of CDMA 800M and CDMA 1900M on the circuit board;
the radio-frequency front-end module 206 comprises a duplexer and a matching network, etc., and appropriate devices are selected to make the bonding pad compatibility of the duplexers and the matching networks of CDMA 800M and CDMA 1900M on the circuit board; and
the antenna module 207 achieves the compatibility of the feed point on the circuit board.

In this embodiment, if CDMA 800M needs to be supported, then the capacitor A is bonded in the first connection selection module 202, and the capacitor B is not bonded; the capacitors M and N are bonded in the second connection selection module 203, and the capacitors X and Y are not bonded; a radio-frequency power amplifier, coupler and matching network corresponding to CDMA 800M are bonded in the radio-frequency transmitting module 204; a matching network corresponding to CDMA 800M is bonded in the radio-frequency receiving module 205; a duplexer and matching network corresponding to CDMA 800M are bonded in the radio-frequency front-end module, and the antenna module 207 supporting CDMA 800M is further installed, so as to fulfill the support for CDMA 800M. The matching network refers to a circuit composed of capacitor(s), inductor(s) or resistor(s).

If CDMA 1900M needs to be supported, then the capacitor B is bonded in the first connection selection module 202, and the capacitor A is not bonded; the capacitors X and Y are bonded in the second connection selection module 203, and the capacitors M and N are not bonded; a radio-frequency power amplifier, coupler and matching network corresponding to CDMA 1900M are bonded in the radio-frequency transmitting module 204; a matching network corresponding to CDMA 1900M is bonded in the radio-frequency receiving module 205; a duplexer and matching network corresponding to CDMA 1900M are bonded in the radio-frequency front-end module, and the antenna module 207 supporting CDMA 1900M is further installed, so as to fulfill the support for CDMA 1900M.

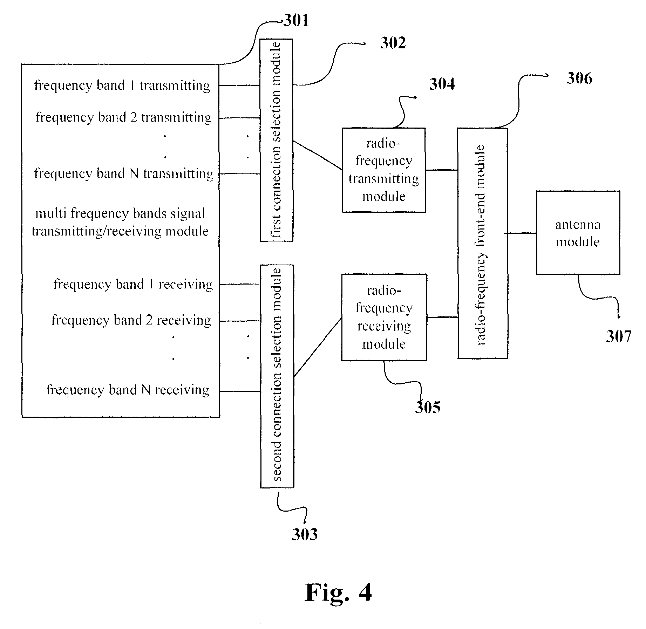

Fig. 2 and Fig. 3 are mainly directed to the mobile terminal with double frequency bands. If it is a mobile terminal with multi frequency bands, there are many ways to use this method. Fig. 4 is a module schematic diagram in which a single radio-frequency transmitting/receiving circuit of a mobile terminal with multi frequency bands is compatible with *N* frequency bands in an embodiment of the present invention. In Fig. 4, a single radio-frequency transmitting/receiving circuit is used to be compatible with the *N* frequency bands.

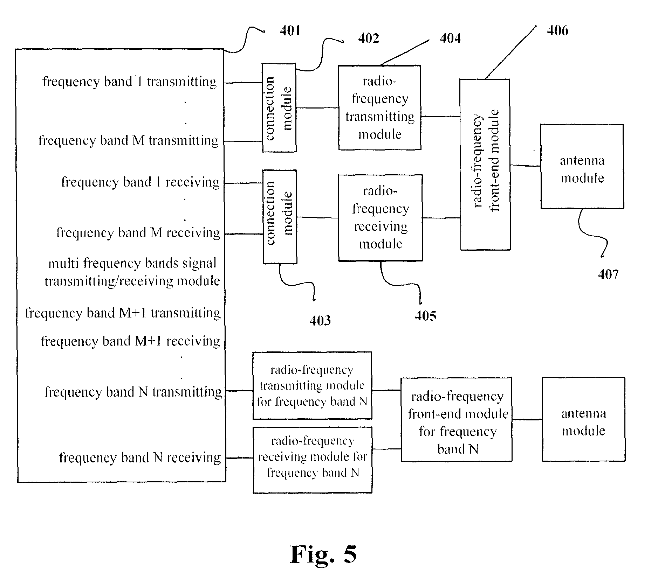

Fig. 5 is a module schematic diagram in which a single radio-frequency transmitting/receiving circuit of a mobile terminal with multi frequency bands is compatible with *N-M* frequency bands in an embodiment of the present invention. As shown in Fig. 5, among *N* frequency bands, there are the *N-M* frequency bands which a single radio-frequency transmitting/receiving circuit is compatible with, and each of the rest M frequency bands is supported by using one radio-frequency transmitting/receiving circuit.

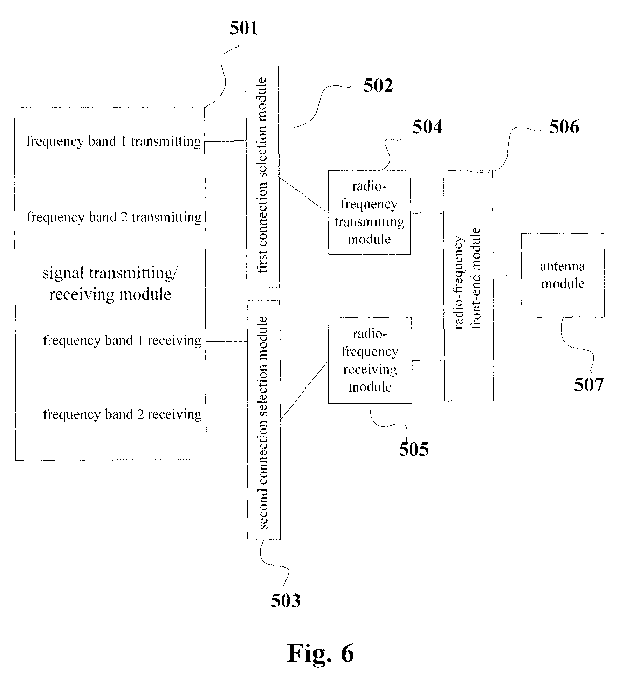

Fig. 6 is a module schematic diagram of a mobile terminal in an embodiment of the present invention. As shown in Fig. 6, the mobile terminal comprises a signal transmitting/receiving module 501, a first connection selection module 502, a second connection selection module 503, a radio-frequency transmitting module 504, a radio-frequency receiving module 505, a radio-frequency front-end module 506, and an antenna module 507 which are connected in sequence.

In the embodiment of the present invention, the radio-frequency transmitting module 504, the radio-frequency receiving module 505 and the radio-frequency front-end module 506 respectively achieve the multi frequency bands bonding pad compatibility on the circuit board. Herein, the multi frequency bands bonding pad compatibility specifically refers to that the radio-frequency transmitting module 504, the radio-frequency receiving module 505 and the radio-frequency front-end module 506 can be compatible with the various frequency bands in the signal transmitting/receiving module 501 on the circuit board. One end of the first connection selection module 502 is connected to the transmitting pin of a certain frequency band in said signal transmitting/receiving module, and the other end thereof is connected to the radio-frequency transmitting module 504; one end of the second connection selection module 503 is connected to the receiving pin of the frequency band in said signal transmitting/receiving module, and the other end thereof is connected to the radio-frequency receiving module 505; and the radio-frequency front-end module 506 is connected to the radio-frequency transmitting module 504 and the radio-frequency receiving module 505.

What are mentioned above are merely the preferred exemplary embodiments of the present invention, which are not intended to limit the present invention; and any modifications, equivalent replacements, improvements, etc. made within the spirit and principles of the present invention shall be covered in the protective scope of the present invention.

## Claims

1. An implementing method for matching frequency bands of a mobile terminal, which comprises a signal transmitting/receiving module with at least two frequency bands, a radio-frequency transmitting module, a radio-frequency receiving module and a radio-frequency front-end module, wherein said mobile terminal further comprises a first connection selection module and a second connection selection module, **characterized in that** the method comprises:
achieving the multi frequency bands bonding pad compatibility on a circuit board respectively by said radio-frequency transmitting module, said radio-frequency receiving module and said radio-frequency front-end module; and
when said mobile terminal needs to work within a certain frequency band, connecting one end of said first connection selection module to a transmitting pin of the frequency band in said signal transmitting/receiving module, and connecting the other end thereof to said radio-frequency transmitting module; connecting one end of said second connection selection module to a receiving pin of the frequency band in said signal transmitting/receiving module, and connecting the other end thereof to said radio-frequency receiving module; and connecting said radio-frequency front-end module to said radio-frequency transmitting module and said radio-frequency receiving module.

2. The implementing method as claimed in claim 1, **characterized in that** said first connection selection module or said second connection selection module comprises at least two of resistors, capacitor(s) or inductor(s).

3. The implementing method as claimed in claim 1, **characterized in that** achieving the multi frequency bands bonding pad compatibility on a circuit board respectively by said radio-frequency transmitting module, said radio-frequency receiving module and said radio-frequency front-end module includes that said radio-frequency transmitting module, said radio-frequency receiving module and said radio-frequency front-end module can be compatible on the circuit board with the various frequency bands in said signal transmitting/receiving module.

4. The implementing method as claimed in claim 1 or 3, **characterized in that** said radio-frequency transmitting module comprises a radio-frequency power amplifier, a coupler and a matching network.

5. The implementing method as claimed in claim 1 or 3, **characterized in that** said radio-frequency receiving module comprises a matching network.

6. The implementing method as claimed in claim 1 or 3, **characterized in that** said radio-frequency front-end module comprises a duplexer and a matching network.

7. The implementing method as claimed in claim 1, **characterized in that** said mobile terminal is a cell phone or a network card.

8. A mobile terminal, which comprises a signal transmitting/receiving module with at least two frequency bands, a radio-frequency transmitting module, a radio-frequency receiving module, a radio-frequency front-end module and an antenna module, **characterized in that** said radio-frequency transmitting module, said radio-frequency receiving module and said radio-frequency front-end module achieve the multi frequency bands bonding pad compatibility respectively on a circuit board; and
said mobile terminal further comprises a first connection selection module and a second connection selection module, wherein one end of said first connection selection module is connected to a transmitting pin of a certain frequency band in said signal transmitting/receiving module, and the other end thereof is connected to said radio-frequency transmitting module; one end of said second connection selection module is connected to a receiving pin of the frequency band in said signal transmitting/receiving module, and the other end thereof is connected to said radio-frequency receiving module; and said radio-frequency front-end module is connected to said radio-frequency transmitting module and said radio-frequency receiving module.

9. The mobile terminal as claimed in claim 8, **characterized in that** said first connection selection module or said second connection selection module comprises at least two of resistors, capacitor(s) or inductor(s).

10. The mobile terminal as claimed in claim 8, **characterized in that** said radio-frequency transmitting module, said radio-frequency receiving module and said radio-frequency front-end module achieving the multi frequency bands bonding pad compatibility respectively on a circuit board specifically refers to that said radio-frequency transmitting module, said radio-frequency receiving module and said radio-frequency front-end module can be compatible on the circuit board with the various frequency bands in said signal transmitting/receiving module.

11. The mobile terminal as claimed in claim 8 or 10, **characterized in that** said radio-frequency transmitting module comprises a radio-frequency power amplifier, a coupler and a matching network.

12. The mobile terminal as claimed in claim 8 or 10, **characterized in that** said radio-frequency receiving module comprises a matching network.

13. The mobile terminal as claimed in claim 8 or 10, **characterized in that** said radio-frequency front-end module comprises a duplexer and a matching network.

14. The mobile terminal as claimed in claim 8, **characterized in that** said mobile terminal is a cell phone or a network card.

15. A mainboard for a mobile terminal, the mainboard comprising a signal transmitting/receiving module interface, a radio-frequency transmitting module interface, a radio-frequency receiving module interface and a radio-frequency front-end module interface, **characterized in that** said mainboard further comprises a first connection selection module interface and a second connection selection module interface, wherein one end of said first connection selection module interface is used for selectively connecting a pin in said signal transmitting/receiving module interface, and the other end thereof for connecting said radio-frequency transmitting module interface; one end of said second connection selection module is used for selectively connecting a pin in said signal transmitting/receiving module interface, and the other end thereof for connecting said radio-frequency receiving module interface; and said radio-frequency front-end module interface connects said radio-frequency transmitting module interface and said radio-frequency receiving module interface.
